# FASCICULE DE BREVET EUROPEEN

(11) **EP 3 359 406 B1**
(45) Date de publication et mention de la délivrance du brevet: **26.06.2019**
(21) Numéro de dépôt: 16785222.7
(22) Date de dépôt: 26.09.2016
(51) Int. Cl.: B60K 11/04, B60K 11/08

(54) **SUPPORT DE MODULE DE FACE AVANT ET MODULE DE FACE AVANT CORRESPONDANT**
FRONTENDMODULTRÄGER UND ZUGEHÖRIGES FRONTENDMODUL
SUPPORT OF FRONT END MODULE AND CORRESPONDING FRONT END MODULE

(30) Priorité: 09.10.2015 FR 1559627
(43) Date de publication de la demande: 15.08.2018
(73) Titulaire: Valeo Systemes Thermiques, 78322 Le Mesnil Saint-Denis (FR)
(72) Inventeur: VACCA, Frédéric, 78910 Behoust (FR)
(74) Mandataire: Tran, Chi-Hai
(86) Numéro de dépôt international: PCT/FR2016/052427
(87) Numéro de publication internationale: WO 2017/060582

(56) Documents cités:
- EP-A1- 1 450 019
- EP-A1- 1 473 449
- WO-A1-2015/129348
- US-A1- 2008 185 125

## Description

La présente invention est du domaine des véhicules automobiles, en particulier des véhicules automobiles comprenant un module de face avant.

La présente invention concerne en particulier un module de face avant pour véhicule automobile, du type comprenant un support propre à recevoir des équipements et à être fixé sur la structure du véhicule et comprenant notamment un dispositif d'échange thermique et un dispositif d'obturation d'une ou plusieurs entrées d'air.

Un module de face avant est un élément structurel du véhicule destiné à supporter divers équipements du véhicule, tels que projecteurs, clignotants, avertisseur sonore, dispositif d'échange de thermique, groupe moto-ventilateur, etc. À l'issue de la production d'un module de face avant, celui-ci peut être assemblé sur le véhicule automobile, notamment avec des éléments du châssis du véhicule automobile, tels que les longerons. De manière connue, le module de face avant comporte un support destiné à recevoir les équipements mentionnés ci-dessus.

De manière connue, le module de face avant comporte un bouclier pourvu d'au moins une entrée d'air afin de permettre l'écoulement d'un flux d'air vers un dispositif d'échange thermique disposé au sein du module de face avant. Selon une solution connue, le bouclier présente deux entrées d'air, dites voie haute et voie basse, séparées par une poutre pare-choc. Derrière cette poutre pare-choc est généralement placé le dispositif d'échange thermique du véhicule automobile.

Le dispositif d'échange thermique est par exemple utilisé pour le refroidissement du moteur ou encore pour la climatisation de l'habitacle.

Le dispositif d'échange thermique comporte généralement un échangeur thermique, tel qu'un radiateur de refroidissement du moteur. Un tel radiateur placé en face avant du véhicule peut être atteint par un flux d'air externe, provenant de l'extérieur du véhicule et passant généralement au préalable à travers la calandre du véhicule. Un fluide de refroidissement circule à l'intérieur du radiateur de façon à échanger de la chaleur avec ce flux d'air externe.

En variante, le dispositif d'échange thermique peut comporter encore au moins un autre échangeur thermique comme le condenseur d'une boucle de climatisation du véhicule.

Il est également connu de disposer un panneau de volets, dans le trajet d'air, généralement devant le dispositif d'échange thermique. La ou les entrées d'air comportent donc des volets mobiles permettant d'ouvrir ou d'obstruer ces entrées d'air. Les volets sont généralement montés pivotants sur le panneau autour d'axes parallèles de manière à prendre une multiplicité de positions angulaires différentes entre une position d'obturation bloquant le passage de l'air jusqu'à une position d'ouverture où un flux d'air maximum peut circuler. Un dispositif de contrôle permet, en règle générale, de piloter le fonctionnement des volets mobiles pour ajuster le débit d'air traversant les entrées d'airs et arrivant au dispositif d'échange thermique en fonction des besoins, et permet d'optimiser l'aérodynamisme du véhicule automobile lorsque celui-ci est en fonctionnement.

Cependant, les dimensions prédéterminées des entrées d'air au sein du bouclier représentent une contrainte pour le débit du flux d'air entrant depuis l'extérieur du véhicule automobile et destiné à refroidir, notamment, les échangeurs thermiques disposés au sein du module de face avant, par aspiration d'air.

En particulier, lorsque le véhicule fonctionne à l'aide d'une pile à combustible, il est nécessaire de refroidir très rapidement la pile à combustible lorsque le véhicule automobile est en fonctionnement. Les dimensions actuelles des entrées d'air au sein d'un bouclier ne permettent pas d'obtenir un débit suffisant du flux d'air entrant pour garantir un refroidissement optimal des échangeurs thermiques, par exemple, dans des conditions spécifiques de fonctionnement du véhicule automobile.

Afin de permettre un refroidissement avec un cycle très court, une solution serait de sur-dimensionner le ou les échangeurs en face avant, en particulier le radiateur de refroidissement. Cependant, compte-tenu de l'emplacement en face avant du véhicule, des limitations concernant l'encombrement s'imposent.

Un support de module de face avant d'un véhicule selon le préambule de la revendication 1 est connu du document EP 1 450 019 A1.

Un des buts de la présente invention est d'optimiser le refroidissement des échangeurs thermiques.

À cet effet, l'invention a pour objet un support de module de face avant d'un véhicule tel qu'un véhicule automobile, comportant un dispositif d'échange thermique destiné à être traversé par un flux d'air, le dispositif d'échange thermique comprenant au moins un échangeur thermique fixe.

Selon l'invention, le dispositif d'échange thermique comporte en outre un échangeur thermique additionnel monté mobile par rapport à l'échangeur thermique fixe entre :
- une position déployée, dans laquelle l'échangeur thermique additionnel est apte à être traversé par le flux d'air, l'échangeur thermique additionnel étant situé dans un même plan que l'échangeur thermique fixe, et
- une position escamotée inactive de l'échangeur thermique additionnel.

Avantageusement, l'échangeur thermique fixe est un radiateur de refroidissement du moteur, et l'échangeur thermique additionnel mobile est un radiateur de refroidissement additionnel du moteur.

Ainsi, en cas de besoin, notamment lorsqu'un refroidissement est nécessaire, l'invention permet d'augmenter la taille du dispositif d'échange thermique devant être traversé par le flux d'air externe.

Lorsqu'il n'est pas nécessaire d'optimiser le refroidissement, cet échangeur thermique additionnel, ici le radiateur de refroidissement additionnel, est escamoté et n'est pas utilisé.

On peut de la sorte améliorer le refroidissement sans sur-dimensionner les échangeurs de face avant.

Le support de module de face avant peut en outre comporter une ou plusieurs des caractéristiques suivantes, prises séparément ou en combinaison :
- l'échangeur thermique additionnel est monté mobile en pivotement par rapport à l'échangeur thermique fixe ;
- l'échangeur thermique additionnel est, dans sa position déployée, agencé dans l'alignement de l'échangeur thermique fixe selon une direction longitudinale de l'échangeur thermique fixe. La taille du dispositif d'échange thermique qui peut être traversé par un flux d'air externe est ainsi augmentée en cas de besoin, sans nécessiter de sur-dimensionner l'échangeur thermique fixe principal ;
- l'échangeur thermique additionnel est articulé sur la partie inférieure de l'échangeur thermique fixe selon un axe vertical à l'état monté dans ledit véhicule ;
- le support de module de face avant comprend un dispositif d'obturation d'au moins une entrée d'air, le dispositif d'obturation comprenant au moins un élément agencé mobile ;
- le dispositif d'obturation comprend un déflecteur d'air mobile de manière à permettre une variation de la surface d'ouverture définie par une entrée d'air à l'état monté dans ledit véhicule, entre une première position fermée destinée à obturer au moins partiellement l'entrée d'air de manière à réduire la surface d'ouverture définie par l'entrée d'air, et une deuxième position ouverte destinée à laisser libre la totalité de l'entrée d'air de manière à augmenter la surface d'ouverture définie par l'entrée d'air ;
- le dispositif d'obturation comprend une calandre mobile entre une position dépliée, dans laquelle la calandre mobile est destinée à être agencée au moins partiellement dans l'entrée d'air, et une position pliée ;
- le module de face avant comprend des moyens pour coupler le déplacement du déflecteur d'air et de la calandre mobile. Le déplacement du déflecteur d'air et le déplacement de la calandre mobile peut être mis en oeuvre par un système de commande commun ou par des systèmes de commande indépendants ;
- lesdits moyens pour coupler le déplacement du déflecteur d'air et de la calandre mobile permettent d'obtenir le déplacement de la calandre mobile en simultanéité avec le déplacement du déflecteur d'air ;
- la calandre mobile est agencée dans la position dépliée, lorsque le déflecteur d'air est dans la position ouverte, et dans la position pliée, lorsque le déflecteur d'air est dans la position fermée. Ce mouvement combiné permet de réduire la surface d'ouverture de l'entrée d'air ou au contraire de la maximiser selon les besoins ;
- le déflecteur d'air est monté mobile en pivotement et/ou la calandre mobile est montée mobile en pivotement ;
- l'axe de pivotement du déflecteur d'air est sensiblement parallèle à l'axe de pivotement de la calandre mobile ;
- l'échangeur thermique additionnel est agencé de manière à être, lorsqu'il est déployé, dans l'alignement de la calandre mobile en position dépliée, selon le sens d'écoulement du flux d'air ;
- l'échangeur thermique additionnel est apte à être entraîné en déplacement lorsqu'au moins un élément mobile du dispositif d'obturation, notamment le déflecteur d'air, est entraîné en déplacement. Le déplacement de l'échangeur thermique additionnel et d'au moins un élément mobile du dispositif d'obturation peut être mis en oeuvre par un système de commande commun ou par des systèmes de commande indépendants ;
- l'échangeur thermique additionnel est apte à être agencé dans la position escamotée lorsque le déflecteur d'air est dans la position fermée, et dans la position déployée lorsque le déflecteur d'air est dans la position ouverte. De la sorte, on peut fournir un apport d'air minimum en cas de besoin, mais aussi au contraire lorsque cela est nécessaire, augmenter à la fois l'ouverture d'admission du flux d'air et la taille du dispositif d'échange thermique destiné à être traversé par le flux d'air ;
- l'échangeur thermique additionnel est agencé de manière à être escamoté derrière le déflecteur d'air en position fermée selon le sens d'écoulement du flux d'air ;
- l'échangeur thermique additionnel est agencé de manière à être, dans sa position déployée, traversé par un flux d'air en provenance d'une entrée d'air inférieure située sur la partie inférieure du module de face avant selon l'axe vertical du véhicule à l'état monté du support de module de face avant dans le véhicule ;
- ladite au moins une entrée d'air présente au moins une partie principale et au moins une partie supplémentaire apte à être obturée par le déflecteur d'air dans sa position fermée et apte à être laissée libre dans la position ouverte du déflecteur d'air, et l'échangeur thermique additionnel est agencé de manière à être, dans sa position déployée, traversé par un flux d'air en provenance de la partie supplémentaire de l'entrée d'air.

L'invention concerne aussi un module de face avant pour véhicule tel qu'un véhicule automobile, comportant un support tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre, de manière schématique un véhicule automobile comprenant un module de face avant avec un bouclier pourvu d'un déflecteur d'air dans une première position fermée,
- la figure 2 montre, de manière schématique un véhicule automobile comprenant un module de face avant avec un bouclier pourvu d'un déflecteur d'air dans une deuxième position ouverte,
- la figure 3 montre une vue partielle et en coupe verticale du module de face avant comprenant un dispositif d'échange thermique avec un échangeur thermique additionnel mobile agencé dans une position escamotée, et
- la figure 4 montre une vue partielle et en coupe verticale du module de face avant comprenant un dispositif d'échange thermique avec l'échangeur thermique additionnel agencé dans une position déployée.

Sur ces figures, les éléments sensiblement identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

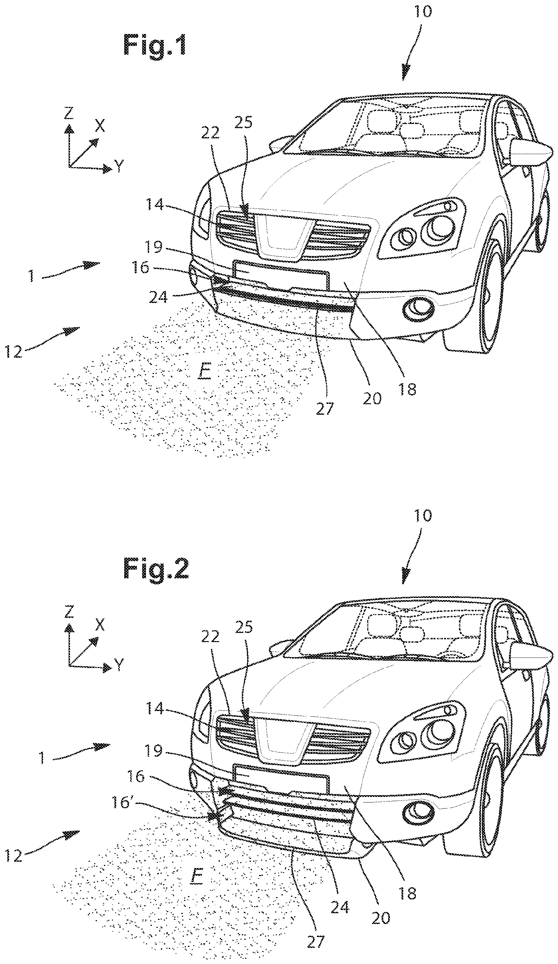

Le véhicule automobile 10 représenté à la figure 1 comporte un module de face avant 1 représenté de façon schématique, situé dans la partie avant du véhicule automobile 10.

Dans la présente description, les termes avant/arrière ou devant/derrière sont désignés en référence au sens de marche du véhicule automobile 10 et vertical/horizontal, supérieur/inférieur ou haut/bas sont désignés en référence à la disposition des éléments sur les figures, qui correspond à la disposition des éléments à l'état monté dans le véhicule automobile 10.

L'axe X du trièdre XYZ représenté sur les figures 1 et 2 correspond à l'axe longitudinal du véhicule automobile 10, l'axe Y correspond à l'axe transversal selon la largeur du véhicule automobile 10, et l'axe Z correspond à l'axe vertical selon la hauteur du véhicule automobile 10.

Le module de face avant 1 comporte un support destiné à supporter divers équipements du véhicule automobile 10. Le véhicule automobile 10 comprend également un bouclier 12 adapté pour être assemblé sur le support de module de face avant 1 du véhicule automobile 10.

Le module de face avant 1 comporte en outre au moins une ouverture qui sert d'entrée d'air 14, 16, 16'. La ou les entrées d'air 14, 16, 16' sont ménagées à l'avant du véhicule automobile sur le bouclier 12, de manière à permettre l'introduction d'un flux d'air F derrière la peau du bouclier 12. La ou les entrées d'air 14, 16, 16' peuvent être agencées de manière sensiblement centrale selon l'axe Y dans le sens de la largeur du véhicule automobile 10.

Dans l'exemple illustré, le bouclier 12 comporte deux entrées d'air 14 et 16, 16', respectivement dites voie haute et voie basse. Le bouclier 12 comprend donc une entrée d'air 14 supérieure située dans la partie supérieure du bouclier 12 selon l'axe vertical Z du véhicule automobile 10. Cette entrée d'air 14 supérieure définit une surface d'ouverture supérieure pour le flux d'air *F* entrant. Le bouclier 12 comprend également une entrée d'air inférieure 16, 16' située dans la partie inférieure du bouclier 12 selon l'axe vertical Z du véhicule automobile 10 qui définit une surface d'ouverture inférieure pour le flux d'air *F* entrant.

Avantageusement, la surface d'ouverture définie par au moins une entrée d'air 14 ou 16, 16' peut être augmentée. Selon un mode de réalisation préféré, c'est la surface d'ouverture globale définie par l'entrée d'air inférieure 16, 16' qui peut être augmentée.

Pour ce faire, l'entrée d'air inférieure 16, 16' présente une partie principale 16 et une partie supplémentaire 16', tel que cela est visible sur la figure 2. Dans cet exemple, la partie supplémentaire 16' est prévue dans la partie inférieure de l'entrée d'air inférieure 16, 16', selon l'axe Z à l'état monté du module de face avant 1 dans le véhicule automobile 10. Les parties principale 16 et supplémentaire 16' de l'entrée d'air inférieure définissent une surface d'ouverture globale inférieure pour le flux d'air *F* entrant. Plus précisément, la partie principale 16 de l'entrée d'air inférieure 16, 16' définit une surface d'ouverture inférieure principale. Et, la partie supplémentaire 16' de l'entrée d'air inférieure 16, 16' définit une surface d'ouverture inférieure supplémentaire, de manière à augmenter la surface d'ouverture globale inférieure.

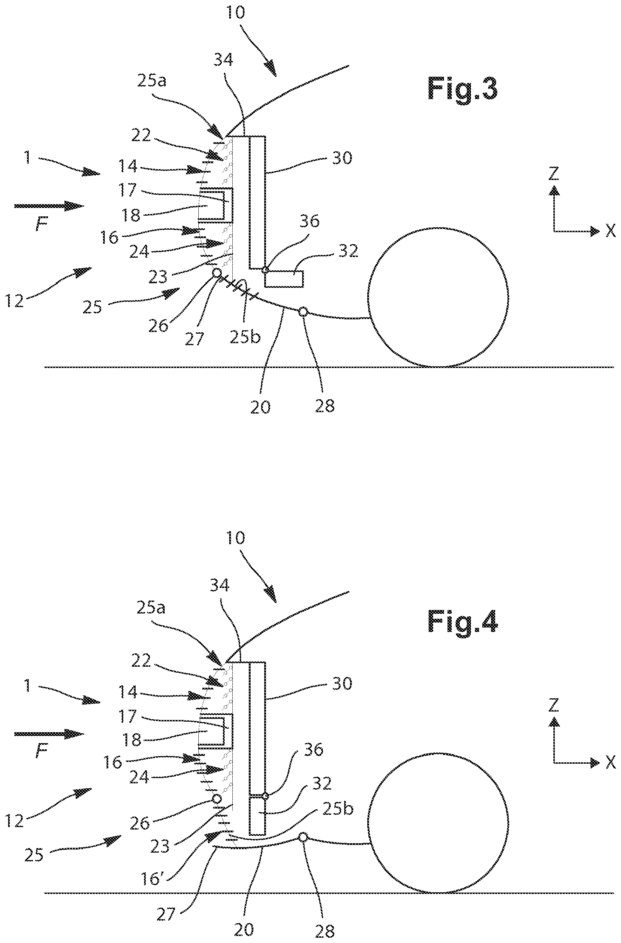

De plus, selon cet exemple, les deux entrées d'air, supérieure 14 et inférieure 16, 16', sont séparées par une structure de pare-chocs 18 comprenant, par exemple, la plaque d'immatriculation 19. Les entrées d'air 14 et 16, 16' sont ici agencées l'une en dessus de l'autre selon l'axe vertical Z du véhicule automobile 10, par exemple de part et d'autre de la structure de pare-chocs 18. À cet effet, le module de face avant 1 comprend avantageusement un logement 17 (cf. figures 3 et 4) défini entre les deux entrées d'air 14 et 16, 16', et dans lequel la structure pare-chocs 18 du véhicule automobile 10 peut être reçue. De façon connue, la structure pare-chocs 18 comprend une poutre d'absorption d'énergie.

Le module de face avant 1 peut comporter en outre avantageusement un dispositif d'obturation 20, 21, 22, 23, 24, 25, 26, 27, 28 de l'entrée d'air ou des entrées d'air 14, 16, 16', tel que décrit plus en détail par la suite.

Enfin, les figures 3 et 4 montrent une vue partielle et en coupe de la partie avant du véhicule automobile 10 comportant le module de face avant 1, ce dernier comprenant notamment un dispositif d'échange thermique 30, 32, tel que décrit plus en détail par la suite.

Tel que représenté de façon schématique, le module de face avant 1, et plus précisément le support du module de face avant peut comporter un cadre porteur ou élément support 34 configuré pour maintenir le dispositif d'échange thermique 30, 32. Le cadre porteur 34 est notamment apte à maintenir au moins un échangeur thermique 30 du dispositif d'échange thermique dans une position fixe.

On décrit maintenant plus en détail le dispositif d'obturation 20, 21, 22, 23, 24, 25, 26, 28.

### Dispositif d'obturation

Le dispositif d'obturation 20, 21, 22, 23, 24, 25, 26, 28 comporte notamment des moyens d'obturation tels qu'un déflecteur d'air 20, éventuellement au moins un panneau 21 de volets 22, et/ou panneau 23 de volets 24, un ensemble calandre 25, et des moyens d'entraînement associés 26, 28.

### Panneaux de volets

Selon un mode de réalisation, le dispositif d'obturation comporte au moins un panneau 21, 23 de volets 22, 24. À l'état monté dans le véhicule automobile 10, le ou les panneaux 21, 23 de volets 22, 24 sont agencés derrière l'ensemble calandre 25 du véhicule automobile 10 selon l'axe X du véhicule automobile 10.

En particulier, dans le cas où le bouclier 12 présente plusieurs entrées d'air 14, 16, 16', le dispositif d'obturation peut comporter plusieurs panneaux 21, 22 de volets 23, 25, par exemple deux panneaux 21, 22, respectivement agencés dans une entrée d'air 14, 16, 16' respective comme illustré sur les figures 3 et 4. Selon une variante non illustrée, on peut prévoir un seul panneau de volets par exemple agencé dans l'une des entrées d'air. Dans cet exemple, un premier panneau 21 de volets 22, est agencé dans l'entrée d'air supérieure 14, et un deuxième panneau 23 de volets 24 est agencé dans l'entrée d'air inférieure 16, 16', plus précisément dans la partie principale 16 de l'entrée d'air inférieure 16, 16'. Les deux panneaux 21, 23 de volets 22, 24 peuvent être indépendants l'un de l'autre.

Au sein de chaque panneau 21, 23, les volets 22, 24 sont superposés, par exemple ici selon l'axe vertical Z, et disposés parallèlement les uns avec les autres.

Les volets 22, 24 peuvent être fixes ou mobiles. Par exemple les volets 22 peuvent être fixes et les volets 24 peuvent être fixes ou mobiles. Les volets mobiles sont capables de pivoter autour d'un axe par exemple un axe horizontal transversal (non montré), entre une position d'obturation d'une ou des entrées d'air 14, 16, 16', par exemple une position d'obturation verticale, empêchant ainsi l'air de passer, et plusieurs positions intermédiaires jusqu'à une position d'ouverture optimale, par exemple une position horizontale, permettant à l'air de passer à travers la surface d'ouverture avec le plus grand débit possible.

Le ou les panneaux 21, 23 de volets 22, 24 sont avantageusement agencés devant le dispositif d'échange thermique 30, 32 selon l'axe horizontal X du véhicule automobile 10 et donc en amont du dispositif d'échange thermique 30, 32 selon le sens d'écoulement d'un flux d'air entrant *F*. Ainsi, lorsque des volets sont mobiles, il est possible notamment de fermer les volets mobiles pour accélérer la montée en température d'au moins un échangeur thermique du dispositif d'échange thermique, par exemple en phase de chauffage pour qu'elle soit la plus rapide possible en diminuant la consommation du véhicule automobile 10, ou au contraire les volets peuvent être ouverts de manière à maximiser le flux d'air *F* entrant, et augmenter ainsi l'efficacité du refroidissement.

### Déflecteur d'air

Selon un mode de réalisation préféré, le dispositif d'obturation comprend un déflecteur d'air 20 ici situé dans la partie inférieure du bouclier 12. Le déflecteur d'air 20 est également désigné sous le terme « spoiler » en anglais.

Bien entendu l'invention ne se limite pas au fait que le déflecteur d'air 20 forme au moins une partie du bouclier 12. En effet, selon un mode de réalisation non illustré, le déflecteur d'air 20 peut former au moins une partie du support de module de face avant ou encore le dispositif d'obturation, notamment le déflecteur d'air 20, peut être un élément distinct du bouclier 12 et du support du module de face avant 1.

À l'état monté sur le véhicule automobile 10, le déflecteur d'air 20 s'étend dans le sens de la largeur du véhicule automobile 10 selon l'axe Y, par exemple de façon sensiblement centrale.

Le déflecteur d'air 20 comporte dans cet exemple une paroi qui peut présenter au moins partiellement une forme sensiblement arrondie.

Selon un mode de réalisation préféré, le déflecteur d'air 20 est mobile entre au moins deux positions fermée et ouverte détaillées ci-dessous. Avantageusement, le déflecteur d'air 20 peut être agencé dans la position fermée lors d'une phase de chauffage et au contraire dans la position ouverte lors d'une phase de refroidissement du moteur.

Sur les figures 1 et 3, le déflecteur d'air 20 est dans une première position dite position fermée, dans laquelle le déflecteur d'air 20 obture partiellement au moins une entrée d'air. Ici, le déflecteur d'air 20 est apte à obturer partiellement l'entrée d'air inférieure 16, 16', plus précisément, dans la position fermée, le déflecteur d'air 20 obture la partie supplémentaire 16' de l'entrée d'air inférieure 16, 16'.

Dans cette position fermée, le déflecteur d'air 20 est par exemple séparé de la structure pare-chocs 18 par la partie principale 16 de l'entrée d'air inférieure 16, 16'.

Le volume intérieur du bouclier 12 en aval de l'entrée ou des entrées d'air 14, 16, 16' forme une chambre d'air qui communique avec l'entrée ou les entrées d'air 14, 16, 16' et qui peut être partiellement fermée par le déflecteur d'air 20, ici c'est la partie inférieure de la chambre d'air qui est fermée, lorsque le déflecteur d'air 20 est dans la position fermée.

Selon le mode de réalisation particulier illustré, dans sa position fermée, le déflecteur d'air 20 est relevé, c'est-à-dire qu'il est orienté vers le haut du véhicule automobile 10 selon l'axe vertical Z.

En outre, en position fermée, le déflecteur d'air 20 vient se rabattre sur au moins une partie de l'ensemble calandre 25. De façon non limitative, dans sa position fermée, le déflecteur d'air 20 vient couvrir au moins une partie 25b de l'ensemble calandre 25, et éventuellement une articulation 26 de l'ensemble calandre 25, tel que décrit plus en détail par la suite.

Le déflecteur d'air 20 présente une extrémité avant 27 ou bord d'attaque, qui vient en appui contre au moins une partie 25b de l'ensemble calandre 25, par exemple sensiblement au niveau de l'articulation 26 de l'ensemble calandre 25.

Par ailleurs, le déflecteur d'air 20 est avantageusement conformé de manière à s'inscrire dans la continuité du bouclier 12, lorsque le déflecteur d'air 20 est dans la position fermée. Avantageusement, le déflecteur d'air 20 est conformé de manière à être affleurant au reste du bouclier 12, lorsque le déflecteur d'air 20 est dans sa position fermée, pour une continuité esthétique du bouclier 12, et plus généralement du véhicule automobile 10.

Sur les figures 2 et 4, le déflecteur d'air 20 est dans une deuxième position, dite position ouverte. Dans sa position ouverte, le déflecteur d'air 20 est baissé, c'est-à-dire qu'il est orienté vers le bas du véhicule automobile 10 selon l'axe vertical Z, autrement dit vers le sol.

De plus, lorsque le déflecteur d'air 20 est en position ouverte, la surface d'ouverture globale de l'entrée d'air inférieure 16, 16' est augmentée par rapport à la surface d'ouverture définie par la partie principale 16 de l'entrée d'air inférieure lorsque le déflecteur d'air 20 est dans la position fermée. En d'autres termes, c'est le déplacement du déflecteur d'air 20 qui permet de dégager la surface d'ouverture inférieure supplémentaire, distincte de la surface d'ouverture inférieure principale, de manière à augmenter les dimensions et la surface d'ouverture globale inférieure. Le déflecteur d'air 20 permet à la partie inférieure du bouclier 12 d'être au moins en partie mobile et indépendante par rapport au reste du bouclier 12. Ainsi, la surface d'ouverture de l'entrée d'air inférieure 16, 16' peut varier selon la position du déflecteur d'air 20.

Le déflecteur d'air 20 est, dans l'exemple illustré, articulé à son extrémité arrière opposée à l'extrémité avant 27, en référence au sens de marche du véhicule automobile 10 lorsque le déflecteur d'air 20 est monté sur le véhicule automobile 10.

Le déplacement du déflecteur d'air 20 peut être mis en oeuvre par au moins un moyen d'entraînement 28. Différents moyens d'entraînement sont envisageables pour déplacer le déflecteur d'air 20.

Selon un mode de réalisation préféré, illustré sur les figures 3 et 4, on peut prévoir au moins un moyen d'entraînement 28 en rotation ou pivotement, permettant au déflecteur d'air 20 de pivoter entre la position fermée, montrée sur les figures 1 et 3, et la position ouverte montrée sur les figures 2 et 4. Le déflecteur d'air 20 est alors apte à pivoter autour d'un axe, qui, dans la position de montage sur le véhicule automobile 10, est par exemple horizontal et transversal, de façon parallèle à l'axe Y du véhicule automobile 10 dans le sens de la largeur du véhicule automobile 10. Le ou les moyens d'entraînement 28 peuvent donc comprendre un actionneur par rotation. De plus, selon l'exemple illustré, le ou les moyens d'entraînement présentent un point d'articulation 28 du déflecteur d'air 20 par rapport à un élément structurel fixe, par exemple du véhicule automobile 10, ou du support du module de face avant 1 ou du bouclier 12.

En outre, en cas de choc, notamment d'un piéton qui heurte l'avant du véhicule automobile 10, au niveau de sa jambe (en étant généralement de profil), si le déflecteur d'air 20 est dans sa position ouverte la face avant présente une surface plane, avec moins d'arête (que lorsque le déflecteur d'air 20 est dans la position fermée), ce qui permet notamment de réduire l'angle de flexion du genou en cas de choc.

De manière avantageuse, on peut prévoir un dispositif de détection (non montré) d'obstacle, et notamment de piéton. En particulier, pour la protection des piétons, le déflecteur d'air 20 peut être utilisé en complément de ce dispositif de détection afin de préparer le véhicule automobile 10 à un éventuel impact, en particulier en cas de choc à faible vitesse, en commandant le déplacement du déflecteur d'air 20 depuis la position fermée vers la position ouverte notamment.

### Ensemble calandre

Le dispositif d'obturation comporte en outre un ensemble calandre 25 assemblé sur le bouclier 12 à l'état monté du véhicule automobile 10. Cet ensemble calandre 25 peut comprendre des grilles.

Selon un mode de réalisation préféré, l'ensemble calandre 25 est au moins partiellement mobile.

Pour ce faire, l'ensemble calandre 25 est ici réalisé en au moins deux parties articulées l'une par rapport à l'autre. Plus précisément, l'ensemble calandre 25 comprend au moins une calandre fixe 25a et au moins une calandre 25b mobile par rapport à la calandre fixe 25a, comme cela est mieux visible sur la figure 4.

Selon le mode de réalisation particulier illustré, l'ensemble calandre 25 comprend une calandre fixe 25a agencée au niveau de l'entrée d'air supérieure 14 et au niveau de la partie principale 16 de l'entrée d'air inférieure 16, 16', et une calandre mobile 25b agencée au niveau de la partie supplémentaire 16' de l'entrée d'air inférieure 16, 16'.

La calandre fixe 25a peut dans cet exemple être réalisée en deux parties fixes respectivement agencées dans l'entrée d'air supérieure 14 et dans la partie principale 16 de l'entrée d'air inférieure.

La calandre mobile 25b est selon l'exemple illustré articulée sur la partie inférieure de la calandre fixe 25a selon l'axe vertical Z à l'état monté dans le véhicule automobile 10.

La calandre mobile 25b est apte à se déplacer entre une position pliée, telle qu'illustrée sur la figure 3, et une position dépliée telle qu'illustrée sur la figure 4. En particulier, la calandre mobile 25b peut pivoter par rapport à la calandre fixe 25a entre les deux positions extrêmes pliée et dépliée. Avantageusement, de façon similaire au déflecteur d'air 20, la calandre mobile 25b est pliée lors d'une phase de chauffage et au contraire dépliée lors d'une phase de refroidissement du moteur.

Le déplacement de la calandre mobile 25b peut être mis en oeuvre par au moins un moyen d'entraînement 26. Différents moyens d'entraînement sont envisageables.

Selon un mode de réalisation préféré, illustré sur les figures 3 et 4, on peut prévoir au moins un moyen d'entraînement 26 en rotation ou pivotement, permettant à la calandre mobile 25b de pivoter entre la position pliée et la positon dépliée. La calandre mobile 25b est alors apte à pivoter autour d'un axe, qui, dans la position de montage sur le véhicule automobile 10, est par exemple horizontal et transversal, de façon parallèle à l'axe Y du véhicule automobile 10 dans le sens de la largeur du véhicule automobile 10. Le ou les moyens d'entraînement 26 peuvent donc comprendre un actionneur par rotation. De plus, selon l'exemple illustré, le ou les moyens d'entraînement présentent un point d'articulation 26 de la calandre mobile 25b par rapport à la calandre fixe 25a.

Avantageusement, le déplacement de la calandre mobile 25b est couplé avec le déplacement du déflecteur d'air 20.

Pour ce faire, le dispositif d'obturation comporte des moyens pour coupler le déplacement du déflecteur d'air 20 et de la calandre mobile 25b, tels que des moyens de solidarisation en déplacement (non représentés), par exemple des moyens de solidarisation en rotation, de sorte qu'un déplacement du déflecteur d'air 20, ici par pivotement, entraîne le déplacement de la calandre mobile 25b, ici par pivotement.

Cela peut se faire par un jeu de cinématique mécanique. À titre d'exemple non limitatif, la pièce menante est le déflecteur d'air 20 et la pièce menée est la calandre mobile 25b.

En variante, le déplacement du déflecteur d'air 20 et le déplacement de la calandre mobile 25b peuvent être commandés électriquement.

On peut prévoir un même système pour la commande de la calandre mobile 25b et du déflecteur d'air 20 ou en alternative deux systèmes de commande indépendants. Dans ce dernier cas, on peut prévoir également des moyens de contrôle configurés de sorte que lorsque le déplacement du déflecteur d'air 20 est commandé, le déplacement de la calandre mobile 25b est commandé également.

Plus précisément, les moyens de solidarisation sont prévus pour que la calandre mobile 25b soit dans sa position pliée lorsque le déflecteur d'air 20 est dans sa position fermée, tel que montré sur la figure 3, tandis que la calandre mobile 25b est dans sa position dépliée lorsque le déflecteur d'air 20 est dans sa position ouverte tel que montré sur la figure 4. Ainsi, les moyens de solidarisation sont tels que lorsque le déflecteur d'air 20 est entraîné dans sa position fermée, la calandre mobile 25b est quant à elle entraînée dans sa position pliée (figure 3), et lorsque le déflecteur d'air 20 est entraîné dans sa position ouverte, la calandre mobile 25b est quant à elle entraînée dans sa position dépliée (figure 4).

Le mouvement combiné de l'ensemble calandre 25 et du déflecteur d'air 20 est tel que dans la position fermée du déflecteur d'air 20, la calandre mobile 25b est dans sa position pliée et le déflecteur d'air 20 est rapproché de la calandre fixe 25a, tandis que dans la position ouverte du déflecteur d'air 20 la calandre mobile 25b est dans sa position dépliée et le déflecteur d'air 20 est éloigné de la calandre fixe 25a.

On décrit maintenant plus en détail le dispositif d'échange thermique 30, 32.

### Dispositif d'échange thermique

Le dispositif d'échange thermique 30, 32 est destiné à être monté, dans le véhicule automobile 10, de manière à être traversé par le flux d'air *F* provenant de l'entrée ou des entrées d'air 14, 16, 16'. À l'état monté dans le véhicule 10, le dispositif d'échange thermique est agencé en aval de l'entrée ou des entrées d'air 14, 16, 16' selon le sens d'écoulement du flux d'air *F*.

Selon le mode de réalisation particulier illustré, le dispositif d'échange thermique 30, 32 est agencé derrière l'ensemble calandre 25, et notamment également derrière les panneaux 21, 23 de volets 22, 24. La chambre d'air définie par le volume intérieur du bouclier 12 est ici interposée entre l'ensemble calandre 25 et le dispositif d'échange thermique 30, 32.

Un dispositif d'échange thermique 30, 32 comporte au moins un échangeur thermique tel qu'un radiateur de refroidissement du moteur du véhicule. On peut envisager que le dispositif d'échange thermique comporte encore au moins un autre échangeur thermique tel qu'un condenseur d'une boucle de climatisation.

Selon un mode de réalisation préféré, le dispositif d'échange thermique comprend au moins un échangeur thermique fixe 30 et au moins un échangeur thermique additionnel 32 mobile par rapport à l'échangeur thermique fixe 30.

L'échangeur thermique fixe 30 est selon le mode de réalisation décrit un radiateur de refroidissement.

Selon le mode de réalisation particulier des figures 3 et 4, l'échangeur thermique fixe 30 est agencé en s'étendant longitudinalement selon l'axe vertical Z à l'état monté dans le véhicule automobile 10. Cet échangeur thermique fixe 30 est aussi appelé échangeur thermique principal 30.

L'échangeur thermique additionnel 32 est quant à lui monté mobile entre une position escamotée inactive visible sur la figure 3 et une position déployée visible sur la figure 4 qui est une position active, c'est-à-dire dans laquelle l'échangeur thermique additionnel 32 peut être traversé par le flux d'air *F*. Il s'agit avantageusement ici d'un radiateur de refroidissement additionnel 32 du moteur du véhicule. Dans ce cas, de façon préférée, le radiateur de refroidissement additionnel 32 est déployé lorsqu'un refroidissement du moteur est mis en oeuvre. Dans le cas contraire, notamment lors d'une phase de chauffage, le radiateur de refroidissement additionnel 32 est dans sa position escamotée. Cette partie additionnelle 32 du dispositif d'échange thermique n'est donc déployée qu'en cas de besoin. Ceci permet d'améliorer les performances de refroidissement sans nécessiter de sur-dimensionner le ou les échangeurs thermiques en face avant.

Les dimensions de l'échangeur thermique additionnel 32 sont choisies pour qu'en position déployée il permette d'améliorer le refroidissement, en formant une extension de l'échangeur thermique fixe 30, de sorte que le dispositif d'échange thermique 30, 32 est traversé par un flux d'air en provenance de la surface d'ouverture définie par les entrées d'air 14 et 16, 16'.

De façon préférentielle, l'échangeur thermique additionnel 32 est apte à être déplacé vers la position escamotée lorsque le déflecteur d'air 20 est en position fermée et la calandre mobile 25b pliée, et vers la position déployée lorsque le déflecteur d'air 20 est en position ouverte et la calandre mobile 25b dépliée.

Dans sa position déployée, l'échangeur thermique additionnel 32 est avantageusement agencé dans le prolongement de l'échangeur thermique fixe 30, selon une direction longitudinale de l'échangeur thermique fixe 30, ici dans le sens de la hauteur de l'échangeur thermique fixe 30 selon l'axe vertical Z à l'état monté dans le véhicule automobile 10. Autrement dit, l'échangeur thermique additionnel 32 est situé dans un même plan que l'autre échangeur thermique fixe 30. Les échangeurs thermiques 30 et 32 sont alors superposés selon l'axe vertical Z à l'état monté dans le véhicule automobile 10. Plus précisément, l'échangeur thermique additionnel 32 est agencé en dessous de l'échangeur thermique fixe 30, selon l'axe vertical Z.

En outre, dans cette position déployée, l'échangeur thermique additionnel 32 est agencé sensiblement en regard de l'entrée d'air inférieure 16, 16', plus précisément en regard de la partie supplémentaire 16' de l'entrée d'air inférieure 16 qui n'est alors pas obturée par le déflecteur d'air 20. L'échangeur thermique additionnel 32 mobile peut ainsi être traversé par l'air issu de l'entrée d'air inférieure 16, 16' grâce au dépliage de la calandre mobile 25b et à l'ouverture du déflecteur d'air 20.

Plus précisément, selon le mode de réalisation particulier illustré, l'échangeur thermique additionnel 32 est dans sa position déployée, agencé dans l'alignement de la calandre mobile 25b elle-même dans sa position dépliée, selon le sens d'écoulement du flux d'air *F*.

Par ailleurs, lorsqu'il est dans sa position escamotée, l'échangeur thermique additionnel 32 n'est plus dans le même plan que l'échangeur thermique fixe 30 mais s'étend selon un plan incliné par rapport au plan défini par l'échangeur thermique principal fixe 30, par exemple de façon sensiblement perpendiculaire selon l'axe X à l'état monté dans le véhicule automobile 10. Plus précisément, selon l'exemple particulier illustré, l'échangeur thermique additionnel 32 est alors escamoté derrière le déflecteur d'air 20, lui-même dans sa position fermée, selon le sens d'écoulement du flux d'air *F*.

Le déplacement de l'échangeur thermique additionnel 32 peut être mis en oeuvre par au moins un moyen d'entraînement. Différents moyens d'entraînement sont envisageables.

Selon un mode de réalisation préféré, illustré sur les figures 3 et 4, on peut prévoir au moins un moyen d'entraînement en rotation ou pivotement, permettant à l'échangeur thermique additionnel 32 de pivoter entre la position escamotée et la positon déployée. L'échangeur thermique additionnel 32 est alors apte à pivoter autour d'un axe, qui, dans la position de montage sur le véhicule automobile 10, est par exemple horizontal et transversal, de façon parallèle à l'axe Y du véhicule automobile 10 dans le sens de la largeur du véhicule automobile 10. Le ou les moyens d'entraînement peuvent donc comprendre un actionneur par rotation. De plus, selon l'exemple illustré, le ou les moyens d'entraînement présentent un point d'articulation 36 de l'échangeur thermique additionnel 32 par rapport à l'échangeur thermique fixe 30. Le point d'articulation 36 est ici prévu à l'extrémité inférieure de l'échangeur thermique fixe 30 selon l'axe vertical Z à l'état monté dans le véhicule automobile 10.

De façon préférée, le déploiement de l'échangeur thermique additionnel 32 est couplé à l'ouverture du déflecteur d'air 20 et avantageusement au dépliage de la calandre mobile 25b.

De plus, comme on le remarque sur les figures 3 et 4, lorsque l'échangeur thermique additionnel 32 est dans sa position déployée, le déflecteur d'air 20 ne peut pas passer en position fermée, l'échangeur thermique additionnel 32 doit donc être escamoté pour que le déflecteur d'air 20 puisse être fermé.

Pour ce faire, on peut prévoir des moyens de solidarisation en déplacement (non visibles), par exemple des moyens de solidarisation en rotation ou pivotement, entre d'une part le déflecteur d'air 20 et/ou la calandre mobile 25b, et d'autre part l'échangeur thermique additionnel mobile 32 de sorte qu'un déplacement, ici par pivotement, du déflecteur d'air 20 et/ou de la calandre mobile 25b, entraîne le déplacement, ici par pivotement, de l'échangeur thermique additionnel 32.

Cela peut se faire par un jeu de cinématique mécanique ou en variante par une commande électrique.

On peut prévoir un même système pour la commande des éléments mobiles du dispositif d'obturation et pour la commande de l'échangeur thermique additionnel 32 ou en alternative deux systèmes de commande indépendants. À cet effet, on prévoit avantageusement des moyens de contrôle configurés pour commander le déplacement de l'échangeur thermique additionnel 32 vers la position escamotée lorsque la fermeture du déflecteur d'air 20 et/ou le pliage de la calandre mobile 25b est commandé. De même, les moyens de contrôle peuvent être configurés pour commander automatiquement le déploiement de l'échangeur thermique additionnel 32 lorsque l'ouverture du déflecteur d'air 20 ou le dépliage de la calandre mobile 25b est commandé.

Ainsi, lorsque le déflecteur d'air 20 est entraîné dans sa position fermée, la calandre mobile 25b est entraînée dans sa position pliée et l'échangeur thermique additionnel 32 est entraîné dans sa position escamotée (figure 3), et lorsque le déflecteur d'air 20 est entraîné dans sa position ouverte, la calandre mobile 25b est entraînée dans sa position dépliée et l'échangeur thermique additionnel 32 est entraîné dans sa position déployée (figure 4).

On comprend donc qu'en dépliant une extension 32 du dispositif d'échange thermique, désignée par échangeur thermique additionnel 32, et en combinant avantageusement ce déploiement au dépliage de la calandre mobile 25b et à l'ouverture du déflecteur d'air 20 alors orienté vers le sol, l'entrée d'air est maximisée, ce qui permet qu'un débit d'air maximum passe à travers le dispositif d'échange thermique 30, 32.

## Revendications

1. Support de module de face avant (1) d'un véhicule (10) tel qu'un véhicule automobile (10), comportant un dispositif d'échange thermique (30, 32) destiné à être traversé par un flux d'air (*F*), le dispositif d'échange thermique (30, 32) comprenant au moins un échangeur thermique (30) fixe,
le dispositif d'échange thermique (30, 32) comportant en outre un échangeur thermique additionnel (32) monté mobile par rapport à l'échangeur thermique fixe (30) entre :
- une position déployée, dans laquelle l'échangeur thermique additionnel (32) est apte à être traversé par le flux d'air (*F*), et
- une position escamotée inactive de l'échangeur thermique additionnel (32),
**caractérisé en ce que**, dans sa position déployée, l'échangeur thermique additionnel (32) est situé dans un même plan que l'échangeur thermique fixe (30).

2. Support de module de face avant (1) selon la revendication précédente, dans lequel l'échangeur thermique additionnel (32) est monté mobile en pivotement par rapport à l'échangeur thermique (30) fixe.

3. Support de module de face avant (1) selon l'une des revendications 1 ou 2, dans lequel l'échangeur thermique additionnel (32) est, dans sa position déployée, agencé dans l'alignement de l'échangeur thermique (30) fixe, selon une direction longitudinale de l'échangeur thermique (30) fixe.

4. Support de module de face avant (1) selon l'une quelconque des revendications précédentes, dans lequel l'échangeur thermique additionnel (32) est articulé (36) sur la partie inférieure de l'échangeur thermique (30) fixe selon un axe vertical (Z) à l'état monté dans ledit véhicule (10).

5. Support de module de face avant (1) selon l'une quelconque des revendications précédentes, comprenant un dispositif d'obturation d'au moins une entrée d'air (14, 16, 16'), le dispositif d'obturation comprenant au moins un élément agencé mobile, parmi :
- un déflecteur d'air (20) mobile de manière à permettre une variation de la surface d'ouverture définie par une entrée d'air (16, 16'),
• entre une première position fermée destinée à obturer au moins partiellement l'entrée d'air (16, 16') de manière à réduire la surface d'ouverture définie par l'entrée d'air (16, 16'), et
• une deuxième position ouverte destinée à laisser libre la totalité de l'entrée d'air (16, 16') de manière à augmenter la surface d'ouverture définie par l'entrée d'air (16, 16'), et
- une calandre mobile (25b) entre
• une position dépliée, dans laquelle la calandre mobile (25b) est destinée à être agencée au moins partiellement dans l'entrée d'air (16, 16'), et
• une position pliée.

6. Support de module de face avant (1) selon la revendication précédente, comprenant des moyens pour coupler le déplacement du déflecteur (20) et le déplacement de la calandre mobile (25b).

7. Support de module de face avant (1) selon l'une des revendications 5 ou 6, dans lequel le déflecteur (20) est monté mobile en pivotement et/ou la calandre mobile (25b) est montée mobile en pivotement.

8. Support de module de face avant (1) selon l'une quelconque des revendications 5 à 7, dans lequel l'échangeur thermique additionnel (32) est agencé de manière à être dans l'alignement de la calandre mobile (25b) en position dépliée, selon le sens d'écoulement du flux d'air (*F*), lorsqu'il est déployé.

9. Support de module de face avant (1) selon l'une quelconque des revendications 5 à 8, dans lequel l'échangeur thermique additionnel (32) est apte à être entraîné en déplacement lorsqu'au moins un élément mobile (20, 25b) du dispositif d'obturation est entraîné en déplacement.

10. Module de face avant (1) de véhicule tel qu'un véhicule automobile comportant un support de module de face avant selon l'une quelconque des revendications précédentes.

## Patentansprüche

1. Vorderseiten-Modulträger (1) eines Fahrzeugs (10) wie etwa eines Kraftfahrzeugs (10), das eine Wärmeaustauschvorrichtung (30, 32) enthält, die dazu bestimmt ist, von einem Luftstrom (F) durchquert zu werden, wobei die Wärmeaustauschvorrichtung (30, 32) wenigstens einen festen Wärmetauscher (30) enthält,
wobei die Wärmetauschervorrichtung (30, 32) außerdem einen zusätzlichen Wärmetauscher (32) umfasst, der in Bezug auf den festen Wärmetauscher (30) beweglich zwischen:
- einer ausgefahrenen Position, in der der zusätzliche Wärmetauscher (32) von dem Luftstrom (F) durchquert werden kann, und
- einer eingefahrenen inaktiven Position des zusätzlichen Wärmetauschers (32)
montiert ist, **dadurch gekennzeichnet, dass** sich der zusätzliche Wärmetauscher (32) in seiner ausgefahrenen Position in derselben Ebene wie der feste Wärmetauscher (30) befindet.

2. Vorderseiten-Modulträger (1) nach dem vorhergehenden Anspruch, wobei der zusätzliche Wärmetauscher (32) in Bezug auf den festen Wärmetauscher (30) rotatorisch beweglich montiert ist.

3. Vorderseiten-Modulträger (1) nach einem der Ansprüche 1 oder 2, wobei der zusätzliche Wärmetauscher (32) in seiner ausgefahrenen Position in Längsrichtung des festen Wärmetauschers (30) ausgerichtet auf den festen Wärmetauscher (30) angeordnet ist.

4. Vorderseiten-Modulträger (1) nach einem der vorhergehenden Ansprüche, wobei der zusätzliche Wärmetauscher (32) am unteren Teil des festen Wärmetauschers (30) längs einer vertikalen Achse (Z) angelenkt (36) ist, wenn der in einem im Fahrzeug (10) montierten Zustand ist.

5. Vorderseiten-Modulträger (1) nach einem der vorhergehenden Ansprüche, der eine Vorrichtung zum Verschließen wenigstens eines Lufteingangs (14, 16, 16') aufweist, wobei die Verschlussvorrichtung wenigstens ein beweglich angeordnetes Element unter den folgenden Elementen umfasst:
- einer Luftablenkeinrichtung (20), die in der Weise beweglich ist, dass sie eine Veränderung der durch einen Lufteingang (16, 16') definierten Öffnungsfläche
• zwischen einer ersten geschlossenen Position, die dazu bestimmt ist, den Lufteingang (16, 16') wenigstens teilweise zu verschließen, derart, dass die durch den Lufteingang (16, 16') definierte Öffnungsfläche verringert ist, und
• einer zweiten offenen Position, die dazu bestimmt ist, den gesamten Lufteingang (16, 16') freizulassen, derart, dass die durch den Lufteingang (16, 16') definierte Öffnungsfläche erhöht ist,
ermöglicht, und
- einem Kühlergitter (25b), das zwischen
• einer auseinandergezogenen Position, in der der bewegliche Kühlergitter (25b) dazu bestimmt ist, wenigstens teilweise in dem Lufteingang (16, 16') angeordnet zu sein, und
• einer zusammengezogenen Position beweglich ist.

6. Vorderseiten-Modulträger (1) nach dem vorhergehenden Anspruch, der Mittel umfasst, um die Verlagerung der Ablenkeinrichtung (20) und die Verlagerung des beweglichen Kühlergitters (25b) zu koppeln.

7. Vorderseiten-Modulträger (1) nach einem der Ansprüche 5 oder 6, wobei die Ablenkeinrichtung (20) rotatorisch beweglich montiert ist und/oder das bewegliche Kühlergitter (25b) rotatorisch beweglich montiert ist.

8. Vorderseiten-Modulträger (1) nach einem der Ansprüche 5 bis 7, wobei der zusätzliche Wärmetauscher (32) in der Weise angeordnet ist, dass er entsprechend der Strömungsrichtung des Luftstroms (F) auf das bewegliche Kühlergitter (25b) in der auseinandergezogenen Position ausgerichtet ist, wenn er ausgefahren ist.

9. Vorderseiten-Modulträger (1) nach einem der Ansprüche 5 bis 8, wobei der zusätzliche Wärmetauscher (32) verlagernd angetrieben werden kann, wenn wenigstens ein bewegliches Element (20, 25b) der Verschlussvorrichtung verlagernd angetrieben wird.

10. Vorderseitenmodul (1) eines Fahrzeugs wie etwa eines Kraftfahrzeugs, das einen Vorderseiten-Modulträger nach einem der vorhergehenden Ansprüche aufweist.

## Claims

1. Support of front-end module (1) for a vehicle (10), such as a motor vehicle (10), comprising a heat exchange device (30, 32) through which a flow of air (*F*) is intended to pass, said heat exchange device (30, 32) comprising at least one fixed heat exchanger (30),
the heat exchange device (30, 32) also comprising an additional heat exchanger (32) mounted such that it can move relative to the fixed heat exchanger (30) between:
- a deployed position, in which the flow of air (*F*) can pass through the additional heat exchanger (32),
and
- an inactive retracted position for the additional heat exchanger (32),
**characterized in that** in its deployed position the additional heat exchanger (32) is located in the same plane as the fixed heat exchanger (30).

2. Support of front-end module (1) according to the preceding claim, in which the additional heat exchanger (32) is mounted such that it can move in a pivotable manner relative to the fixed heat exchanger (30).

3. Support of front-end module (1) according to one of Claims 1 or 2, in which the additional heat exchanger (32) in its deployed position is arranged in the alignment of the fixed heat exchanger (30) in a longitudinal direction of the fixed heat exchanger (30) .

4. Support of front-end module (1) according to any one of the preceding claims, in which the additional heat exchanger (32) is articulated (36) on the lower part of the fixed heat exchanger (30) along a vertical axis (Z) in the mounted state in said vehicle (10).

5. Support of front-end module (1) according to any one of the preceding claims, comprising a sealing device for at least one air inlet (14, 16, 16'), the sealing device comprising at least one element which is arranged such that it can move from among:
- an air deflector (20) movable so as to permit a variation of the opening surface defined by an air inlet (16, 16'),
• between a first closed position intended to seal at least partially the air inlet (16, 16'), so as to reduce the opening surface defined by the air inlet (16, 16') and
• a second open position intended to leave open the entire air inlet (16, 16'), so as to increase the opening surface defined by the air inlet (16, 16'), and
- a radiator grille (25b) movable between
• an unfolded position in which the movable radiator grille (25b) is intended to be arranged at least partially in the air inlet (16, 16'), and
• a folded position.

6. Support of front-end module (1) according to the preceding claim, comprising means for coupling the displacement of the deflector (20) and the displacement of the movable radiator grille (25b).

7. Support of front-end module (1) according to one of Claims 5 or 6, in which the deflector (20) is mounted such that it can move in a pivotable manner and/or the movable radiator grille (25b) is mounted such that it can move in a pivotable manner.

8. Support of front-end module (1) according to any one of Claims 5 to 7, in which the additional heat exchanger (32) is arranged so as to be in the alignment of the movable radiator grille (25b) in the unfolded position, in the direction of flow of the flow of air (F), when it is deployed.

9. Support of front-end module (1) according to any one of Claims 5 to 8, in which the additional heat exchanger (32) is capable of being driven in displacement when at least one movable element (20, 25b) of the sealing device is driven in displacement.

10. Front-end module (1) for a vehicle such as a motor vehicle comprising a support of front-end module according to any one of the preceding claims.
